# EUROPÄISCHE PATENTANMELDUNG

(11) **EP 4 199 325 A1**
(43) Veröffentlichungstag der Anmeldung: **21.06.2023**
(21) Anmeldenummer: 21214794.6
(22) Anmeldetag: 15.12.2021
(51) Int. Cl.: H02K 9/18, H02K 9/10, H02K 1/20, H02K 1/32

(54) **AUFSATZKÜHLER EINER DYNAMOELEKTRISCHEN MASCHINE MIT PLATTENKÜHLERN**

(71) Anmelder: Siemens Aktiengesellschaft, 80333 München (DE)
(72) Erfinder: Krompasky, Erik, 25216 Nucice (CZ); Lunácek, Ondrej, 14000 Prague 4 (CZ); Rut, Martin, 25088 Celakovice (DE)
(74) Vertreter: Siemens Patent Attorneys

(57) **Zusammenfassung**

Die Erfindung betrifft einen Aufsatzkühler (4) einer dynamoelektrischen Maschine (5), die einen Stator (17) mit einem Wicklungssystem und einen um eine Achse (7) drehbar gelagerten Rotor (18) aufweist,
- wobei der Aufsatzkühler (4) als Wärmetauscher ausgebildet ist, der einen Primärkreislauf (2) und einen davon strömungstechnisch getrennten Sekundärkreislauf (3) aufweist,
- wobei der Aufsatzkühler (4) ein Gehäuse (15) mit Aufnahmeöffnungen (22) aufweist, in die als Plattenwärmetauscher ausgebildete Module (1) einsetzbar sind,
- wobei das Gehäuse (15) des Aufsatzkühlers (4) einen, insbesondere achsparallelen Mittelkanal (20) des Sekundärkreislaufs (3) aufweist, der insbesondere mittig im Gehäuse (15) verläuft, und ein Abluftkanal (38) des Sekundärkreislaufs (3) seitlich aus dem Gehäuse (15) führt, insbesondere senkrecht zu einem Zuluftkanal (37).

## Beschreibung

Die Erfindung betrifft einen Aufsatzkühler einer geschlossenen dynamoelektrischen Maschine, eine dynamoelektrische Maschine, ein Verfahren zur Kühlung einer dynamoelektrischen Maschine, als auch die Verwendung einer dynamoelektrischen Maschine.

Dynamoelektrische Maschine verursachen im Betrieb Verluste, die abgeführt werden müssen, um einen ordnungsgemäßen Betrieb der dynamoelektrischen Maschine gewährleisten zu können.

Dabei sind grundsätzlich verschiedene Kühlmedien im Einsatz wie Gas, insbesondere Luft oder Flüssigkeiten, insbesondere Wasser.

Bei geschlossen dynamoelektrischen Maschinen liegt ein innerer geschlossener Kühlkreislauf vor (Primärkreislauf), bei dem insbesondere Luft oder ein anderes Medium umgewälzt wird. Eine Rückkühlung dieses Mediums des Primärkreislaufes findet dabei in einem Wärmetauscher statt (Sekundärkreislauf), der auf der Maschine angeordnet ist.

Im Wesentlichen gibt es u.a. zwei bekannte Luftkühlerprinzipien für diese geschlossenen dynamoelektrischen Maschinen. Zum einen die Rohrbündel-Luft-Luft-Wärmetauscher. Nachteilig ist das vergleichsweise dazu erforderliche große Bauvolumen und die kostenintensive Herstellung. Eine erforderliche Reinigung der jeweiligen Rohre des Rohrbündel-Luft-Luft-Wärmetauscher zur Aufrechterhaltung der Kühlleistung ist äußerst aufwändig. Außerdem ist eine symmetrische, gleichmäßige Kühlung der dynamoelektrischen Maschine nahezu unmöglich.

Des Weiteren sind grundsätzlich Platten-Luft-Luft-Wärmetauscher aus der WO 01/05017 A1 und der WO 2016/046407 A1 bekannt. Nachteilig dort ist der vergleichsweise aufwändige Aufbau und eine umständliche Luftführung.

Ausgehend davon liegt der Erfindung die Aufgabe zugrunde die oben genannten Nachteile zu vermeiden und einen Aufsatzkühler einer dynamoelektrischen Maschine bereitzustellen, der eine vergleichsweise einfache Luftführung aufweist und an die erforderlichen Wärmelasten der dynamoelektrischen Maschine anpassbar ist.

Die Lösung der gestellten Aufgabe gelingt durch einen Aufsatzkühler einer dynamoelektrischen Maschine, die einen Stator mit einem Wicklungssystem und einen um eine Achse drehbar gelagerten Rotor aufweist,
- wobei der Aufsatzkühler als Wärmetauscher ausgebildet ist, der einen Primärkreislauf und einen davon strömungstechnisch getrennten Sekundärkreislauf aufweist,
- wobei der Aufsatzkühler ein Gehäuse mit Aufnahmeöffnungen aufweist, in die als Plattenwärmetauscher ausgebildete Module einsetzbar sind,
- wobei das Gehäuse des Aufsatzkühlers einen, insbesondere achsparallelen Mittelkanal des Sekundärkreislaufs aufweist, der insbesondere mittig im Gehäuse verläuft, und ein Abluftkanal des Sekundärkreislaufs seitlich aus dem Gehäuse führt, insbesondere senkrecht zu einem Zuluftkanal.

Die Lösung der gestellten Aufgabe gelingt auch durch eine dynamoelektrische Maschine mit einem erfindungsgemäßen Aufsatzkühler, wobei ein Gehäuse der dynamoelektrischen Maschine Öffnungen aufweist, die mit Zu- und Abluftöffnungen des Aufsatzkühlers derart korrespondieren, dass sich ein Primärkreislauf einstellt, der mittels eines Kühlluftstrom des Sekundärkreislaufes rückkühlbar ist.

Die Lösung der gestellten Aufgabe gelingt auch durch ein Verfahren zur Kühlung einer mit einem erfindungsgemäße Aufsatzkühler versehenen dynamoelektrischen Maschine wobei die Kühltemperatur in einem Primärkreislauf und/oder in einem Sekundärkreislauf mittels Sensoren erfasst werden, diese Daten einer Regelvorrichtung übermittelt werden, um die Drehzahl von Fremdlüftern zu steuern und/oder Leitvorrichtungen zu stellen.

Die Lösung der gestellten Aufgabe gelingt auch durch eine Verwendung einer dynamoelektrischen Maschine mit einem erfindungsgemäßen Aufsatzkühler beispielsweise bei Kompressoren, Verdichtern oder Pumpen.

Erfindungsgemäß wird nunmehr durch einen Aufsatzkühler ein vergleichsweise effizienteres Kühlsystem für dynamoelektrische Maschinen bereitgestellt, das aufgrund seines modularen Designs für einen Primärkreislauf von ein- und zweiseitigen Belüftungssystemen dynamoelektrischer Maschinen geeignet ist.

Durch den modularen Aufbau des Plattenwärmetauschers in dem Aufsatzkühler ist ein einfacher Austausch der einzelnen Module zur Überholung, Reinigung etc. möglich. Der Betrieb der dynamoelektrischen Maschine muss bei Wartung einzelner Module nicht unterbrochen werden, da die Kühlung über die verbleibenden Module erfolgt. Es ist lediglich mit einem dementsprechenden Verlust der Kühlleistung zu rechnen.

Vorteilhafterweise lassen sich kostengünstige standardisierte Module als Plattenwärmetauscher einsetzen.

Durch die Verwendung von Modulen, können in dieselbe Gehäuse des Aufsatzkühlers Module eingesetzt werden, die entweder nach dem Kreuzstrom- oder Gegenstromprinzip arbeiten. Dies führt zu einer Anpassung an den Anwendungszweck und/oder erforderliche Kühlleistung des Aufsatzkühlers.

Die chemische Beständigkeit des Aufsatzkühlers kann durch die Verwendung beschichteter Platten in jedem der Module des Plattenwärmetauscher verbessert werden. Die jeweils erforderliche Beschichtung kann dabei an die Anforderungen der chemischen Beständigkeit bzw. den Verwendungszweck des auf der Maschine angeordneten Aufsatzkühlers angepasst werden.

Als Primärkreislauf wird unabhängig von ein- oder zweiseitiger Belüftung innerhalb der dynamoelektrischen Maschine der Luftstrom bzw. Luftstromverteilung bezeichnet, der Komponenten der Maschine, wie Wickelkopfraum, Wickelkopf, Blechpaket, Wicklungen, Gehäuse, Lager an- bzw. umströmt und als geschlossener Kreislauf ausgeführt ist, der keinen strömungsmäßigen Kontakt nach außen hat. Der Luftstrom des Primärkreislaufes wird durch einen oder mehrere Eigenlüfter und/oder Fremdlüfter drückend oder saugend generiert.

Als Sekundärkreislauf wird der Luftstrom im Aufsatzkühler bezeichnet, der wärmetechnisch mit dem Luftstrom des Primärkreislaufes gekoppelt ist, ihn also rückkühlen kann, wobei der Luftstrom bzw. Luftstromverteilung des Sekundärkreislaufes durch Eigen- und/oder Fremdlüfter drückend oder saugend generiert wird.

Vorzugsweise ist der Sekundärkreislauf offen ausgeführt, d.h. er wird mit Umgebungsluft betrieben, die aus der Umgebung angesaugt wird und erwärmt an die Umgebung wieder abgegeben wird. Damit kann eine dynamoelektrische Maschine mit einem derartigen Aufsatzkühler ausgestattet an nahezu beliebigen Orten aufgestellt werden. Es sind ggf. vor den Sekundärkreislauf Filtermatten oder Luftfilter für stark verschmutzte Luft vorzusehen.

Dabei kann sich jeder Luftstrom sowohl des Primärkreislaufes als auch des Sekundärkreislaufes zumindest abschnittsweise innerhalb seines Strömungsverlaufs in parallele Strömungspfade aufteilen, insbesondere während des Wärmeaustausches zwischen Primärkreislauf und Sekundärkreislauf. Dies geschieht vorteilhafterweise durch Leitvorrichtungen in der dynamoelektrischen Maschine und/oder im Aufsatzkühler um die Kühlwirkung der Strömung von Primärkreislauf und/oder Sekundärkreislauf zu optimieren.

Die Erfindung sowie weitere vorteilhafte Ausgestaltungen der Erfindung werden anhand prinzipiell dargestellter Ausführungsbeispiele näher erläutert, darin zeigen:
- FIG 1, 2: verschiedene Ausführungen von Plattenkühlern,
- FIG 3: Längsschnitt einer dynamoelektrischen Maschine mit Aufsatzkühler,
- FIG 4: Querschnitt einer dynamoelektrischen Maschine mit Aufsatzkühler,
- FIG 5: perspektivische Darstellung einer dynamoelektrischen Maschine mit Aufsatzkühler,
- FIG 6: Längsschnitt einer dynamoelektrischen Maschine mit Aufsatzkühler mit einem prinzipiellen Primärkreislauf und Sekundärkreislauf,
- FIG 7: Draufsicht auf einen Aufsatzkühler mit prinzipiellen Sekundärkreislauf,
- FIG 8: Längsschnitt einer dynamoelektrischen Maschine mit Aufsatzkühler mit einem weiteren prinzipiellen Primärkreislauf und Sekundärkreislauf,
- FIG 9: Draufsicht auf einen Aufsatzkühler mit prinzipiellem Sekundärkreislauf,
- FIG 10: Längsschnitt einer dynamoelektrischen Maschine mit Aufsatzkühler mit einem weiteren prinzipiellen Primärkreislauf und Sekundärkreislauf,
- FIG 11: Draufsicht auf einen Aufsatzkühler mit prinzipiellen Sekundärkreislauf,
- FIG 12 bis FIG 20: Anordnungen von Fremdlüftern an einer dynamoelektrischen Maschine mit Aufsatzkühler,
- FIG 21 bis FIG 24: Anordnungen von Modulen im Aufsatzkühler,
- FIG 25, 26: Anordnung eines Fremdlüfter am Aufsatzkühler bei einer internen beidseitigen Belüftung einer dynamoelektrischen Maschine,
- FIG 27, 28: prinzipielle Durchströmungsrichtungen der Module des Aufsatzkühlers,
- FIG 29, 30: asymmetrischer Aufbau eines Aufsatzkühlers,
- FIG 31 bis FIG 33: Anordnungen von Aufsatzkühlern an einer dynamoelektrischen Maschine,
- FIG 34 bis FIG 37: mögliche Anordnungen von optionalen Luftleitelementen am Austritt des Sekundärkreislaufes aus dem Aufsatzkühler.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 18 und damit auf die entsprechende Symmetrieachse des Stators 17. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 18 und Stator 17, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die folgenden Ausführungen können beliebig kombiniert werden. Ebenso sind auch Einzelmerkmale der jeweiligen Ausführungen kombinierbar, ohne das Wesen der Erfindung zu verlassen.

Zur Vermeidung von Wiederholungen wird bei der Beschreibung von bereits grundsätzlich dargestellten Ausführungen mit deren Bezugszeichen im Folgenden schwerpunktmäßig nur noch auf die ergänzenden oder unterscheidenden Merkmale der jeweiligen Ausführung eingegangen.

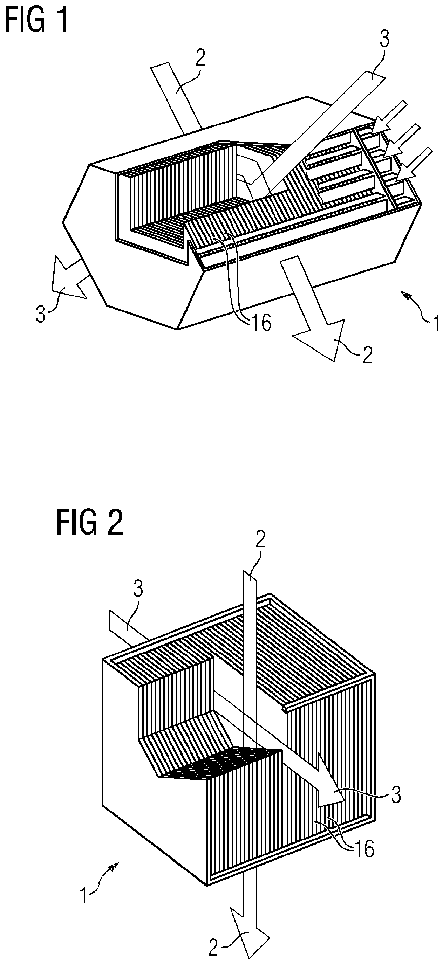

FIG 1 zeigt ein Modul 1 eines Plattenwärmetauschers, der einen sechseckigen Querschnitt aufweist, wobei das Modul 1 hexagonal ausgeführt ist. Die Platten des Moduls 1 sind so angeordnet, dass die Luftströme eines Primärkreislaufes 2 und eines Sekundärkreislaufes 3 in dem Modul 1 über die Platten die Wärme austauschen können.

FIG 2 zeigt ein Modul 1 eines Plattenwärmetauschers, der einen viereckigen Querschnitt aufweist, wobei das Modul 1 würfelförmig oder quaderförmig ausgeführt ist. Die Platten des Moduls 1 sind so angeordnet, dass die Luftströme des Primärkreislaufes 2 und Sekundärkreislaufes 3 in dem Modul 1 über die Platten die Wärme austauschen können.

Beiden Ausführungen ist gemein, dass die Module 1 so aus Platten zusammengesetzt sind, dass jeweils in aufeinanderfolgenden Zwischenräumen benachbarter Platten einmal der Luftstrom des Primärkreislaufes - also die aufgewärmte Luft, und danach die Luft des Sekundärkreislaufes - also die wärmeabführende Luft fließt.

Das Plattenpaket der jeweiligen Module 1 ist nach außen und zwischen den Luftströmen mittels Dichtelementen abgedichtet. Ebenso ist ein Verkleben oder ein Verlöten des Plattenpaketes zur Abdichtung denkbar. Eine Paketierung der Module 1 wird durch Spannschrauben, oder Schweißverbindungen geschaffen.

Um den Wärmeübergang zwischen Primärkreislauf 2 und Sekundärkreislaufes 3 innerhalb eines Moduls 1 zu intensivieren, sind die Platten profiliert gestaltet, so dass sich Turbulenzen in der jeweiligen Durchströmung bilden.

Des Weiteren lässt sich durch ein Gleichstrom- oder Gegenstromprinzip des Primärkreislaufes 2 und Sekundärkreislaufes 3 die Kühlleistung der einzelnen Module 1 und eines damit ausgestatteten Aufsatzkühlers 4 beeinflussen.

Die Abschnitte der Luftströme in den Modulen 1 von Primärkreislauf 2 und Sekundärkreislauf 3 sind in FIG 1 und FIG 2 lediglich beispielhaft dargestellt.

Die Luftströme des Primärkreislaufes 2 und Sekundärkreislaufes 3 werden durch dementsprechende Leitvorrichtungen 12 in einem Aufsatzkühler 4 gebildet.

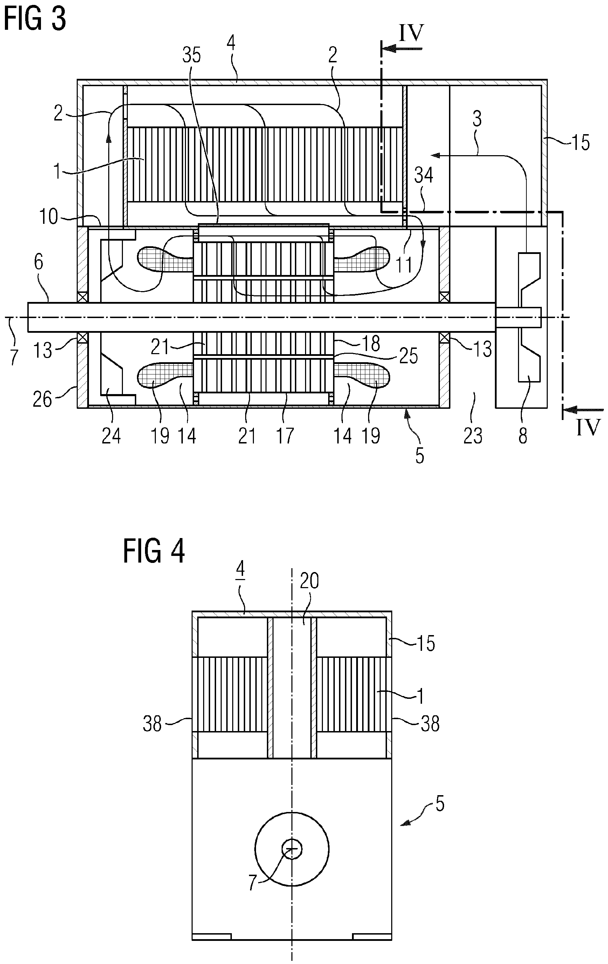

FIG 3 zeigt in einem Längsschnitt eine dynamoelektrische Maschine 5 mit einem Aufsatzkühler 4. Die dynamoelektrische Maschine 5 ist in einem Gehäuse 26 untergebracht, das die Lager 13 aufnimmt. Das Gehäuse 26 der dynamoelektrischen Maschine 5 ist geschlossen ausgeführt und weist lediglich vorgegebene Öffnungen - Zustromkanäle 10 und Abstromkanäle 11 - zu dem Aufsatzkühler 4 auf, die einen Primärkreislauf 2 innerhalb der geschlossenen dynamoelektrische Maschine 5 gestatten.

Ein Stator 17 ist in dem Gehäuse 26 drehfest positioniert. Der Stator 17 weist in nicht näher dargestellten Nuten seines Blechpakets ein Wicklungssystem auf, das bestromt, aufgrund elektromagnetischer Wechselwirkungen über einen Luftspalt 25 der dynamoelektrischen Maschine 5 mit dem Rotor 18 eine Rotation des Rotors 18 um seine Achse 7 bewirkt. Der Rotor 18 kann einen Kurzschlusskäfig aufweisen, so dass die dynamoelektrische Maschine 5 als eine Asynchronmaschine ausgebildet ist. Der Rotor 18 kann auch Permanentmagnete aufweisen, so dass die dynamoelektrische Maschine 5 als eine Synchronmaschine (mit Vollpol- oder Schenkelläufer) ausgebildet ist.

Des Weiteren ist es möglich, den Rotor 18 mit einem eigenen Wicklungssystem auszubilden, das beispielsweise über eine Schleifringanordnung elektrisch versorgt wird.

Grundsätzlich eignet sich der Aufsatzkühler 4 für jede erdenkliche Art von dynamoelektrischen Maschinen 5. Es ist lediglich notwendig, dass die Zustromkanäle 10 und Abstromkanäle 11 im Gehäuse 26 der dynamoelektrischen Maschinen 5 mit dementsprechenden vorgesehenen Öffnungen oder Ausnehmungen im Gehäuse 15 des Aufsatzkühlers 4 strömungstechnisch korrespondierend angeordnet sind.

Das axial geschichtete Blechpaket von Stator 17 und Rotor 18 ist in diesem Fall in vorgebbaren Abständen mit radialen Kanälen 21 versehen, um eine Kühlung u.a. des jeweiligen Blechpakets und des in den Nuten befindlichen Wicklungssystems zu verbessern.

Des Weiteren ist ein Innenlüfter 24 vorgesehen, der die Luft des Primärkreislaufes 2 fördert. In diesem Fall liegt eine sogenannte einseitige Belüftung vor, die auch als Z-Belüftung bezeichnet wird.

Als einseitige Belüftung wird die Belüftung der dynamoelektrischen Maschinen 5 bezeichnet, bei der ein Luftstrom (Primärkreislauf 2) auf einer Seite der dynamoelektrischen Maschinen 5 in einen Wickelkopfraum 14 eingespeist wird und danach über verschiedene parallele und/oder serielle Strömungskanäle - Wickelkopf, Rücken des Blechpakets des Stators 17, radiale Kühlkanäle 21, Luftspalt 25, etc. - zu dem anderen Wickelkopfraum 14 gelangt. Von dort gelangt die erwärmte Luft des Primärkreislaufes 2 über einen oder mehrere Lüfter - Eigenlüfter oder Fremdlüfter - in den Aufsatzkühler 4 zur Rücckühlung.

Die Luft des Primärkreislaufes 2 wird somit über einen Wickelkopfraum 14 in das Gehäuse 26 der dynamoelektrischen Maschine 5 geführt und dort über den Wickelkopf 19 und die Blechpakete und/oder den Luftspalt 25 in den anderen Wickelkopfraum 14 geführt. Von dort wird der nun erwärmte Kühlluftstrom über den Aufsatzkühler 4, insbesondere den dort angeordneten Modulen 1 mittels des Sekundärkreislaufes 3 rückgekühlt.

In dieser und den weiteren Ausführungsbeispielen sind teilweise die Primärkreisläufe 2 und oder Sekundärkreisläufe 3 nur teilweise dargestellt, so ist beispielsweise in FIG 3 nur ein der Teil des Primärkreislaufes 2 oberhalb der Achse 7 dargestellt. Der Primärkreislauf 2 oder ein Teil davon verläuft ebenso im unteren Abschnitt, als auch in anderen Bereichen des Innenraumes der dynamoelektrischen Maschine 5 wie z.B. im Luftspalt 25.

Das Gehäuse 15 des Aufsatzkühlers 4 weist u.a. Schalldämmelemente auf, um Schallemissionen im Umfeld der dynamoelektrischen Maschinen 5 zu reduzieren.

Ein Lüfter 8 generiert einen Kühlluftstrom des Sekundärkreislaufes 3, der den erwärmten Kühlluftstrom des Primärkreislaufes 2 über die Plattenwärmetauscher der Module 1 rückkühlt.

In diesem Fall ist der Lüfter 8 ein Eigenlüfter, der mit der Welle 6 drehfest verbunden ist. Es sind jedoch stattdessen oder auch ergänzend auch Fremdlüfter 31 an und/oder auf dem Aufsatzkühler 4 möglich, um den Kühlluftstrom des Sekundärkreislaufes 3 zu unterstützen

Die Module 1 sind, wie auch FIG 4 zu entnehmen, vorzugsweise entlang einem Mittelkanal 20 angeordnet, der sich zumindest abschnittsweise achsparallel erstreckt. In dieser Ausführungsform sind die Module 1 beidseitig entlang des Mittelkanals 20 angeordnet.

Die prinzipiell angedeutete Anordnung der Platten der Module 1, soll nur die prinzipielle Darstellung von Plattenkühlern der Module 1 zeigen, jedoch nicht zwangsläufig eine dadurch festgelegte Strömungsrichtung von Primärkreislauf 2 und/oder Sekundärkreislauf 3.

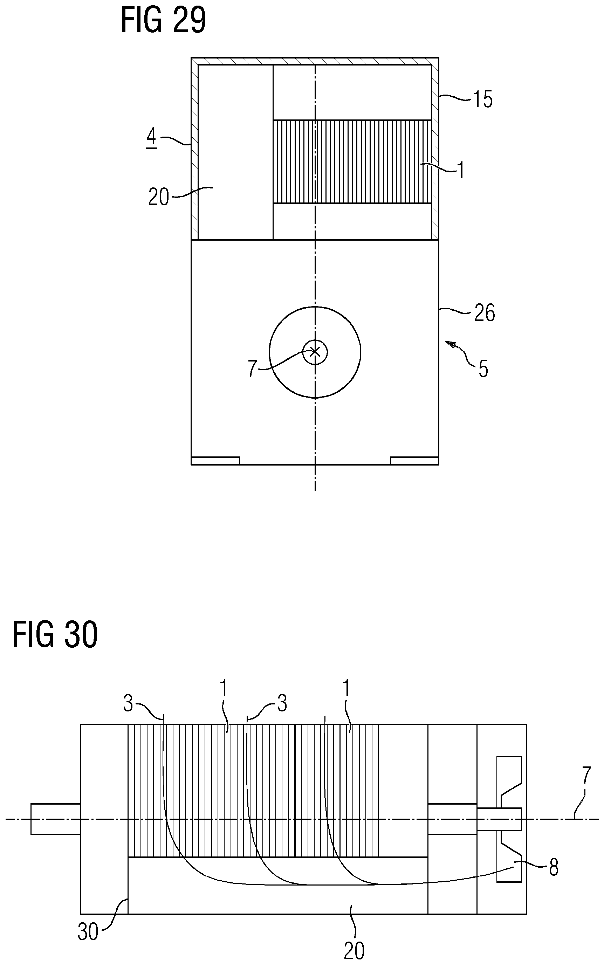

Auch eine einseitige Anordnung von Modulen 1 mit einem asymmetrisch verlaufenden Mittelkanal 20 ist vorstellbar (FIG 29, FIG 30). Dabei weisen dann die Module 1 eine größere Tiefe auf, um den Wärmeaustausch zwischen Primärkreislauf 2 und Sekundärkreislauf 3 zu verbessern.

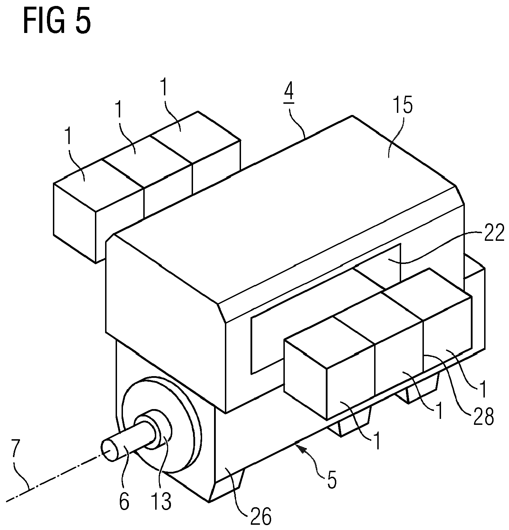

FIG 5 zeigt in einer perspektivischen Darstellung den Aufsatzkühler 4 auf dem Gehäuse 26 der dynamoelektrischen Maschine 5. Dabei sind die Module 1, die als hexagonale oder - wie in diesem Fall - würfelförmige Plattenkühler ausgebildet sind, aus darstellerischen Gründen aus ihren, vorzugsweise komplementären Aufnahmeöffnungen 22 entnommen. Jedes der Module 1 kann einzeln entnommen werden, zwecks Reinigung der Platten oder des Austauschs, ohne dass ein strömungstechnischer Bypass durch die nicht belegte Aufnahmeöffnung 22 geschaffen wird, der die Kühlleistung der verbleibenden Module 1 beeinträchtigt.

Im Gehäuse 15 des Aufsatzkühlers 4 sind Öffnungen vorhanden, die zu den Zustromkanäle 10 und Abstromkanäle 11 in dem Gehäuse 26 der dynamoelektrischen Maschine 5 komplementär ausgeführt sind, so dass sich ein geschlossener Primärkreislauf 2 einstellt. Außerdem sind auch weitere Leitvorrichtungen 12 im Gehäuse 15 angeordnet, um Primärkreislauf 2 und Sekundärkreislauf 3 auszubilden.

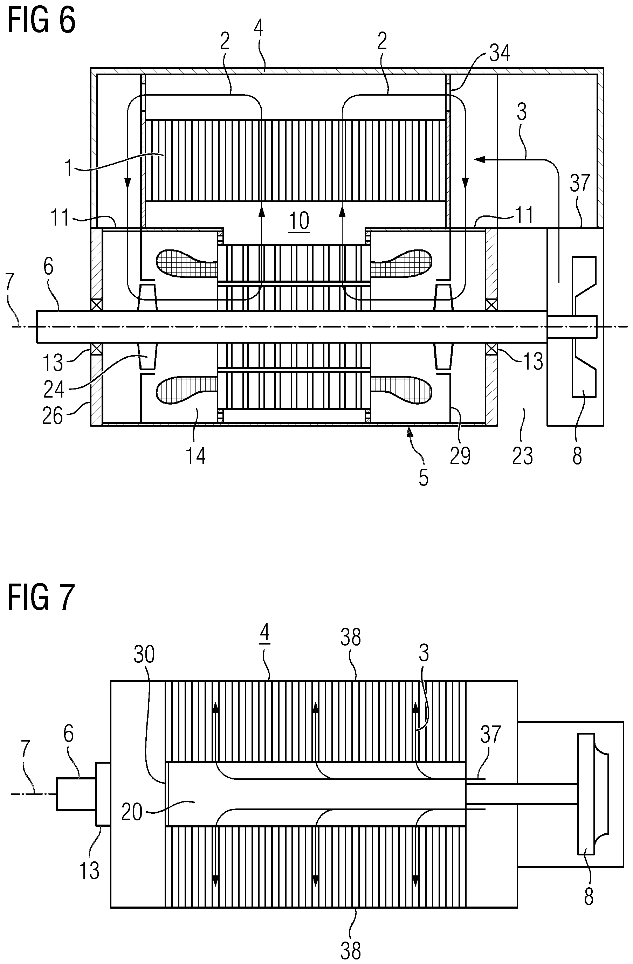

FIG 6 zeigt einen Aufsatzkühler 4 einer dynamoelektrischen Maschine 5 mit einer prinzipiell dargestellten zweiseitigen Lüftung des Primärkreislaufes 2 - auch als X-Lüftung bekannt. Dabei ist gegenüber der Ausführung gemäß FIG 3 die Platte 35 entfernt, die u.a. neben einer Anpassung von Leitvorrichtungen 12 im Aufsatzkühler 4 für die einseitige Belüftung notwendig ist.

Als zweiseitige Belüftung wird die Belüftung der dynamoelektrischen Maschinen 5 bezeichnet, bei der ein Luftstrom (Primärkreislauf 2) auf beiden Seiten der dynamoelektrischen Maschinen 5 in den Wickelkopfraum 14 eingespeist wird und danach über verschiedene parallele und/oder serielle Strömungskanäle - Wickelkopf, Rücken des Blechpakets des Stators 17, radiale Kühlkanäle 21, Luftspalt 25, etc. - im Wesentlichen mittig am Rücken des Statorblechpakets in den Aufsatzkühler 4 gelangt. Die erwärmte Luft des Primärkreislaufes 2 wird durch einen oder mehrere Lüfter - Eigenlüfter oder Fremdlüfter - in den Aufsatzkühler 4 zur Rückkühlung gefördert. Dementsprechende Blendenelemente 29 verbessern den Strömungsverlauf des Primärkreislaufes 2.

FIG 7 zeigt in einer Draufsicht auf den Aufsatzkühler 4 einen prinzipiellen Verlauf des Luftstromes des Sekundärkreislaufes 3. Dabei wird von einem Eigenlüfter 8 und/oder einem Fremdlüfter 31 ein Luftstrom axial über einen Zuluftkanal 37 in den Mittelkanal 20 gedrückt, der über Plattenwärmetauscher der Module 1 Luft des Primärkreislaufes 2 rückkühlt und erwärmt aus dem Gehäuse 15 des Aufsatzkühlers 4 über die Abluftkanäle 38 austritt.

Dabei ist zu beachten, dass sowohl die Zuluftkanäle 37 als auch die Abluftkanäle 38 des Aufsatzkühlers 4 nicht nur kanalförmig ausgestaltet sein können, sondern auch lediglich als Öffnungen im Gehäuse 15 des Aufsatzkühlers 4 ausgebildet sein können.

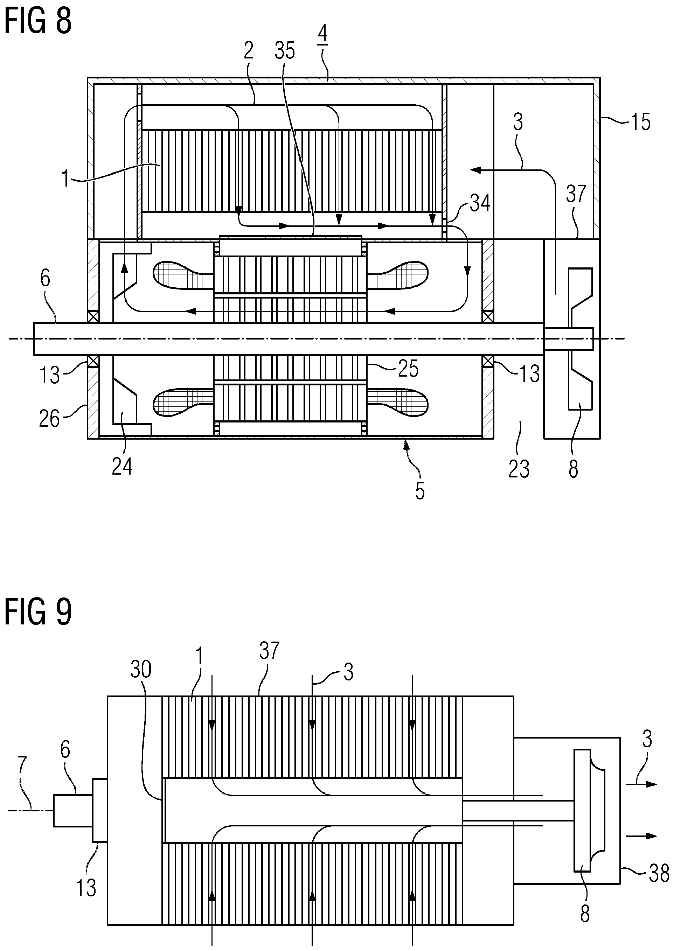

FIG 8 zeigt einen Aufsatzkühler 4 einer dynamoelektrischen Maschine 5 mit einer prinzipiell dargestellten einseitigen Lüftung des Primärkreislaufes 2 - die auch als Z-Lüftung bezeichnet wird. Dabei wird die erwärmte Luft des Primärkreislaufes 2 im Aufsatzkühler 4 zunächst nach oben geleitet, um von dort dann über die Module 1 auf ihrem "Weg" nach unten rückgekühlt zu werden.

FIG 9 zeigt in einer Draufsicht auf den Aufsatzkühler 4 einen prinzipiellen Verlauf des Luftstromes des Sekundärkreislaufes 3. Dabei wird von einem Eigenlüfter 8 und/oder einem Fremdlüfter 31 ein Luftstrom axial aus dem Mittelkanal 20 gesaugt. Der Luftstrom des Primärkreislaufes 2 wird somit über Plattenwärmetauscher der Module 1 rückgekühlt. Der Eigenlüfter 8 saugt in diesem Fall den Luftstrom des Sekundärkreislaufes 3 durch die Module 1. Es ist aber ebenso möglich, dass der Eigenlüfter 8 die Luft aus der Umgebung über die Module 1 nach außen drückt.

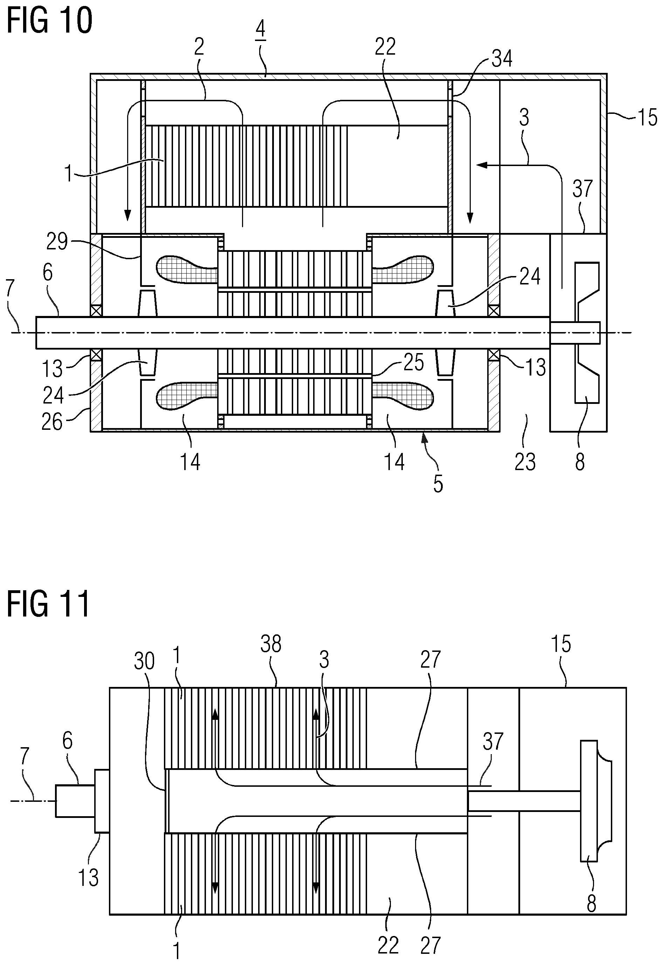

FIG 10 zeigt eine weitere Möglichkeit des Einsatzes des erfindungsgemäßen Aufsatzkühlers 4 bei einer zweiseitigen Belüftung der dynamoelektrischen Maschine 5. Im vorliegenden Beispiel ist die erste Aufnahmeöffnung 22 nicht belegt. Dadurch sind strömungstechnisch die Leitvorrichtungen 12 des Aufsatzkühlers 4 so positioniert, dass weiterhin der Primärkreislauf 2 geschlossen bleibt.

FIG 11 zeigt die dazu korrespondierende Gestaltung des Sekundärkreislaufes 3, dessen nicht belegte Aufnahmeöffnungen 22 für den Sekundärkreislauf 3 blockiert sind, um einen strömungsmäßigen Kurzschluss zu vermeiden.

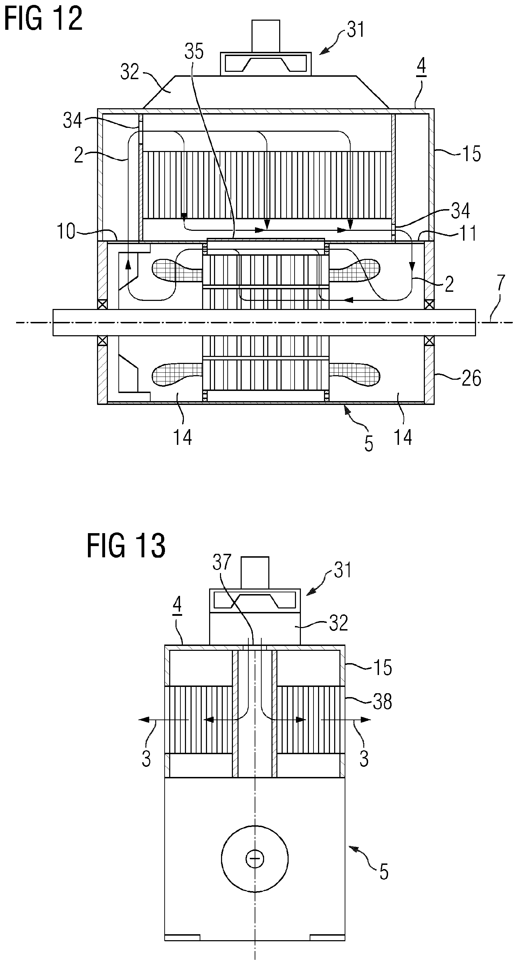

FIG 12 zeigt einen prinzipiellen Längsschnitt des Aufsatzkühlers 4 und der dynamoelektrischen Maschine 5, wobei für den Sekundärkreislauf 3 ein Fremdlüfter 31 auf dem Aufsatzkühler 4 positioniert ist. Der Fremdlüfter 31, insbesondere ein Axiallüfter ist über eine Haube 32 strömungstechnisch mit dem Sekundärkreislauf 3 verbunden. Der Primärkreislauf 2 ist in der Maschine und dem Aufsatzkühler 4 einflutig (also als Z-Belüftung) geführt.

FIG 13 zeigt diese Ausführungsform in einen Teilquerschnitt des Aufsatzkühlers 4 und der dynamoelektrischen Maschine 5, wobei der Fremdlüfter 31 über den Zuluftkanal 37 und den Mittelkanal 20 den Sekundärkreislauf 3 mit Luft versorgt.

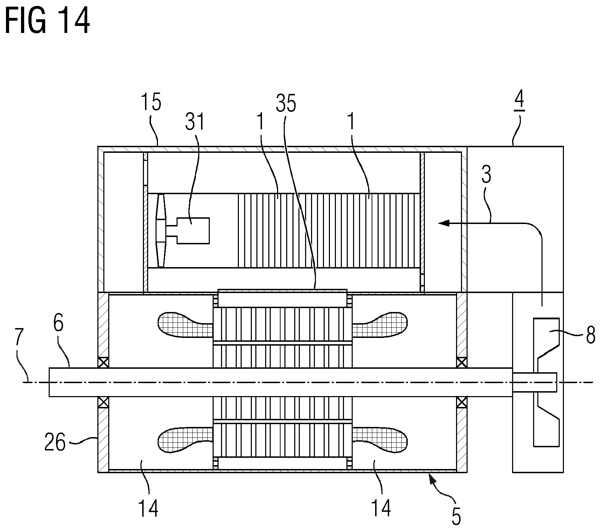

FIG 14 zeigt einen prinzipiellen Längsschnitt des Aufsatzkühlers 4 und der dynamoelektrischen Maschine 5, wobei ein Eigenlüfter 8 den Luftstrom des Sekundärkreislaufes 3 antreibt und im Mittelkanal 20 ein zusätzlicher Fremdlüfter 31 positioniert ist, der zur Aufrechterhaltung des Luftstromes im Sekundärkreislauf 3 beiträgt. Der Primärkreislauf 2 ist wieder einflutig ausgebildet und die Module 1 werden seriell oder parallel durchströmt.

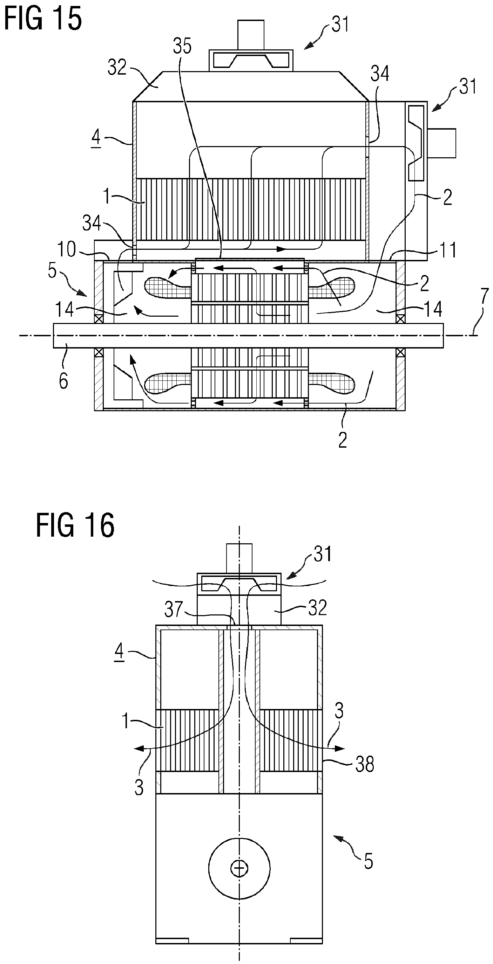

FIG 15 zeigt einen prinzipiellen Längsschnitt des Aufsatzkühlers 4 und der dynamoelektrischen Maschine 5, wobei der Sekundärkreislauf 3, wie in FIG 12 durch einen Fremdlüfter 31 angetrieben wird. Der einflutig ausgeführte Primärkreislauf 2 wird ebenfalls durch eine Fremdlüfter 31 angetrieben. Dabei sind ev. Luftführungskanäle im Aufsatzkühler 4, insbesondere des Primärkreislaufes 2 dementsprechend gegenüber einer Eigenbelüftung des Primärkreislaufes 2 anzupassen. Dabei wird die von unten in die Module 1 eingeführte Luft des Primärkreislaufes 2 nach oben, insbesondere radial nach oben geführt und auf dem Weg dorthin über die Module 1 rückgekühlt.

FIG 16 zeigt diese Ausführungsform nach FIG 15 in einem Teilquerschnitt des Aufsatzkühlers 4 und der dynamoelektrischen Maschine 5, wobei der Fremdlüfter 31 über den Mittelkanal 20 den Sekundärkreislauf 3 mit Luft versorgt. Dieser Luftstrom passiert die Module 1 des Aufsatzkühlers 4 parallel.

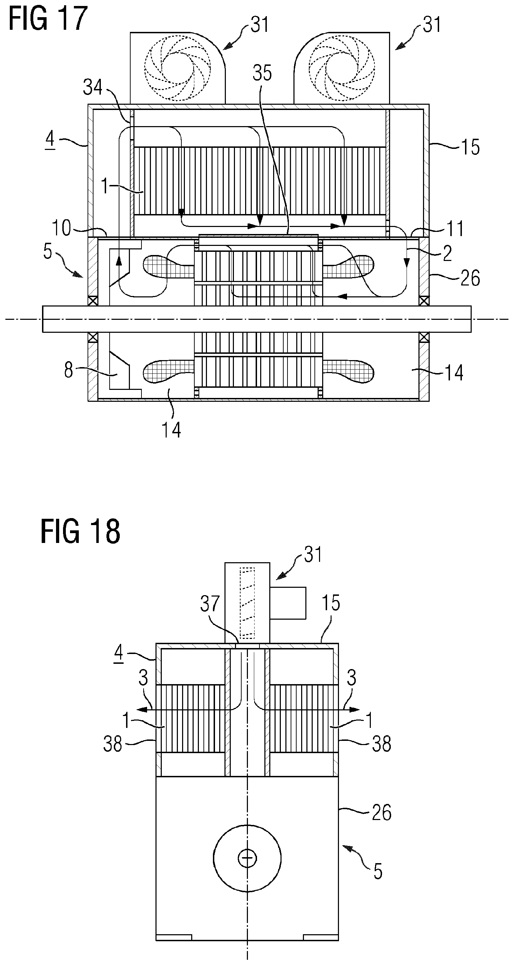

FIG 17 zeigt einen prinzipiellen Längsschnitt des Aufsatzkühlers 4 und der dynamoelektrischen Maschine 5, wobei der Sekundärkreislauf 3, durch zwei Fremdlüfter 31 angetrieben wird. Diese sind oben auf dem Aufsatzkühler 4 positioniert. Der Primärkreislauf 2 ist wieder einflutig ausgeführt.

FIG 18 zeigt diese Ausführungsform nach FIG 17 in einem Teilquerschnitt des Aufsatzkühlers 4 und der dynamoelektrischen Maschine 5, wobei die Fremdlüfter 31 über den Mittelkanal 20 den Sekundärkreislauf 3 mit Luft versorgen.

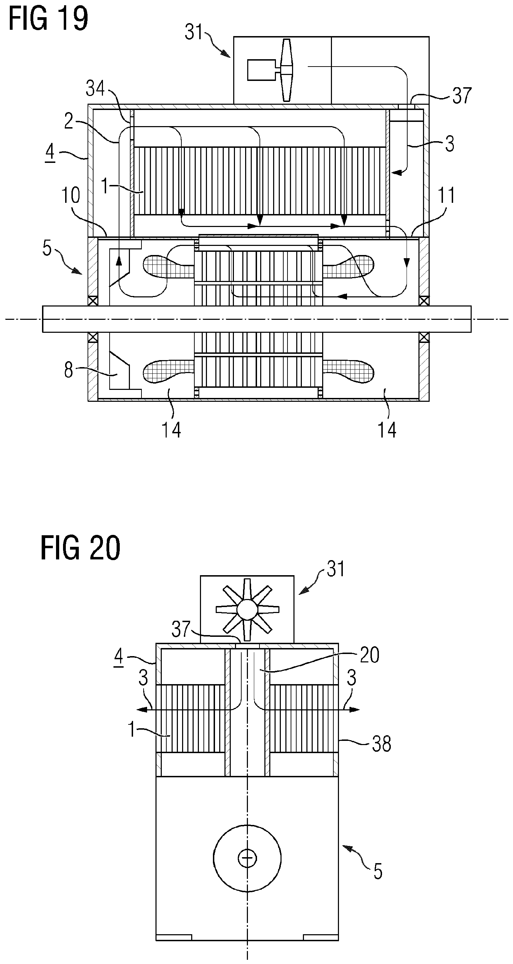

FIG 19 zeigt einen prinzipiellen Längsschnitt des Aufsatzkühlers 4 und der dynamoelektrischen Maschine 5, wobei der Sekundärkreislauf 3, durch einen Fremdlüfter 31 angetrieben wird, der als Axiallüfter ausgebildet ist und auf dem Aufsatzkühler 4 positioniert ist. Der Luftstrom des Sekundärkreislaufes 3 wird über Umlenkkanäle an der Stirnseite des Aufsatzkühlers 4 in den Mittelkanal 20 gespeist. Der einflutig ausgeführte Primärkreislauf 2 wird durch einen auf der Welle 6 positionierten Eigenlüfter 24 angetrieben.

FIG 20 zeigt diese Ausführungsform nach FIG 19 in einem Teilquerschnitt des Aufsatzkühlers 4 und der dynamoelektrischen Maschine 5.

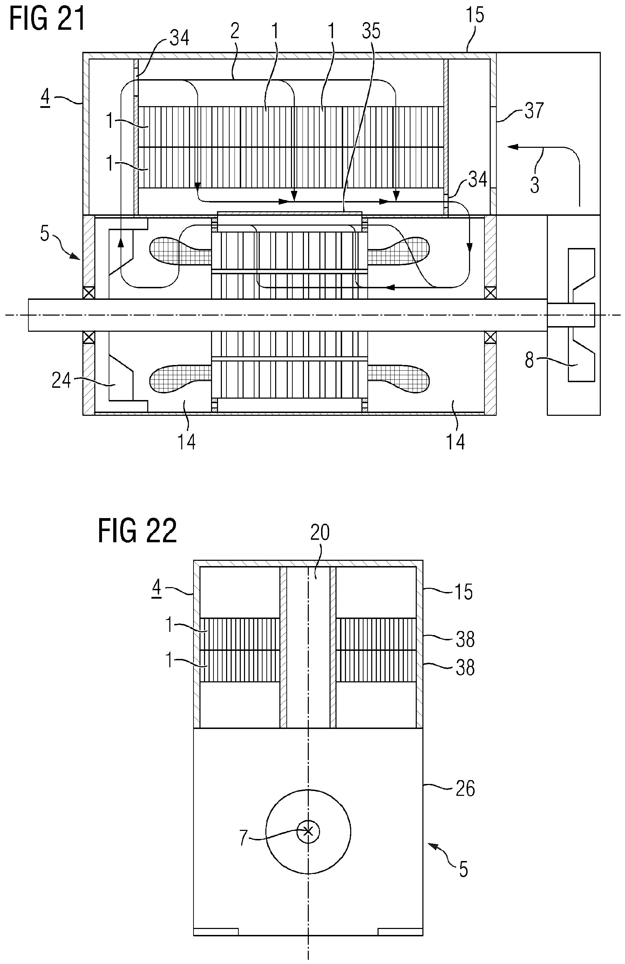

FIG 21 zeigt einen prinzipiellen Längsschnitt des Aufsatzkühlers 4 und der dynamoelektrischen Maschine 5, wobei der Sekundärkreislauf 3, durch einen Lüfter 8, der mit der Welle 6 der dynamoelektrischen Maschine 5 drehfest verbunden ist, angetrieben wird und sich außerhalb des Gehäuses 26 befindet. Der einflutig ausgeführte Primärkreislauf 2 wird durch einen auf der Welle 6 positionierten Eigenlüfter 24 angetrieben. Entscheidend bei dieser Ausführung ist, dass die Module 1 nicht nur in einer axial ausgerichteten Reihe angeordnet sind, sondern auch übereinander und oder hintereinander (wie in FIG 22 dargestellt) anordenbar sind, sofern die Aufnahmeöffnungen 22 des Aufsatzkühlers 4 dies gestatten. Dabei verläuft der Luftstrom des Primärkreislaufes 2 in Modulen 1 parallel und/oder seriell.

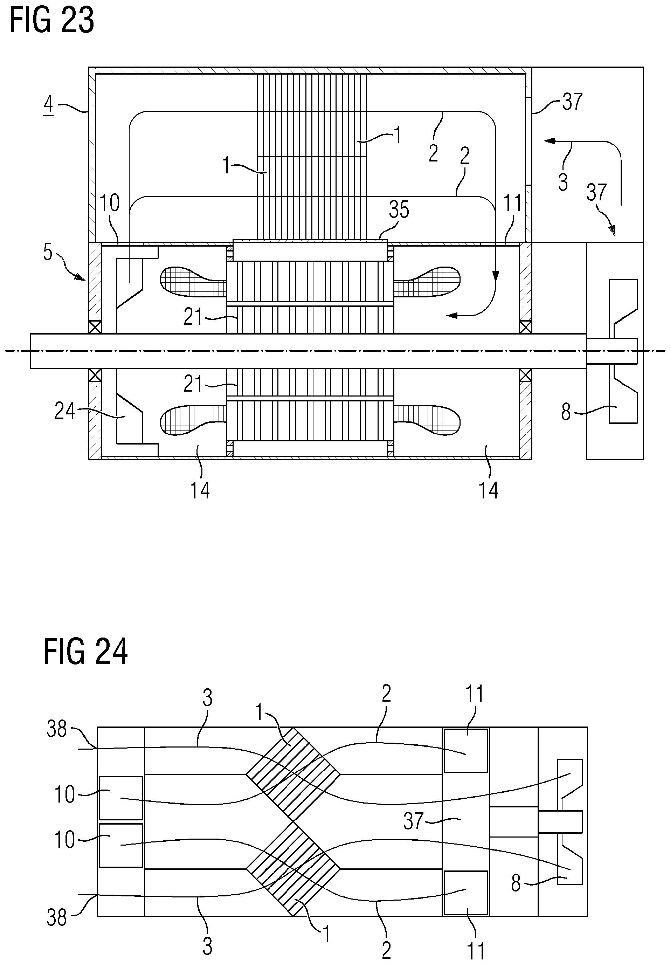

FIG 23 zeigt in einem prinzipiellen Längsschnitt des Aufsatzkühlers 4 und der dynamoelektrischen Maschine 5, eine weitere Anordnung von Modulen 1 in einem Aufsatzkühler 4. Der Primärkreislauf 2 spaltet sich auf, wobei jeder Teilstrom die jeweiligen Module 1 des Plattenkühlers seriell durchströmt. Danach wird der rückgekühlte Luftstrom wieder zusammengeführt und der dynamoelektrischen Maschine 5 über die Abstromkanäle 11 zugeführt.

Diese Ausführung zeigt u.a., dass die Module 1 den Raum innerhalb des Aufsatzkühlers 4 - je nach Vorgabe der Aufnahmeöffnungen 22 - nahezu beliebig einnehmen können. Das heißt sowohl in der Höhe als auch in der Tiefe und in der axialen Ausrichtung sind nahezu keine räumlichen Beschränkungen vorgegeben, wenn man von den Strömungskanälen von Primärkreislauf 2 und Sekundärkreislauf 3 als auch den Leitvorrichtungen 12 absieht.

FIG 24 zeigt einen weiteren möglichen Verlauf des Primärkreislaufes 2 und Sekundärkreislaufes 3, sowie eine schräge Anordnung von Modulen 1. Der Primärkreislauf 2 tritt aufgrund des Eigenlüfters 24 aus einem oder mehreren Zustromkanälen 10 in den Aufsatzkühler 4 und nach dem Wärmeaustausch durch die Module 1 des Plattenkühlers über die Abströmkanäle 11 wieder rückgekühlt in das Gehäuse 26 der dynamoelektrischen Maschine 5.

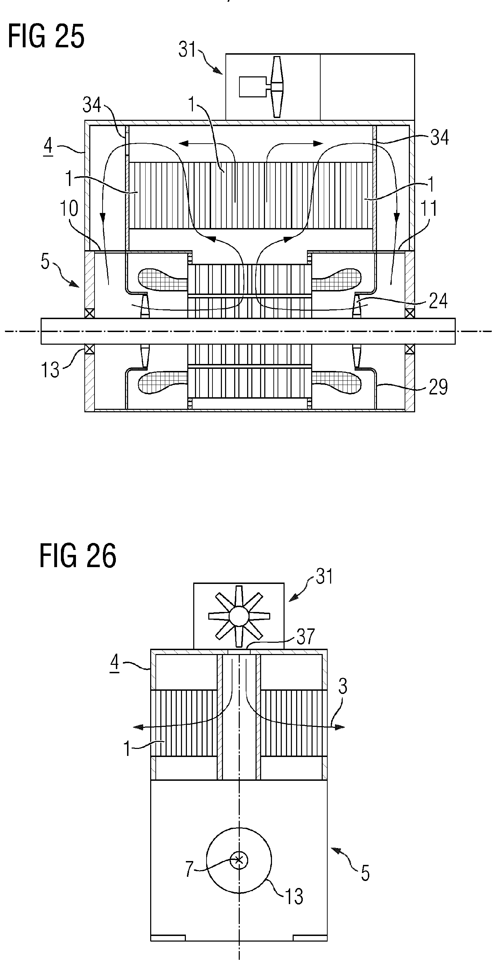

FIG 25 zeigt einen Aufbau des Aufsatzkühlers 4 und der dynamoelektrischen Maschine 5, ähnlich FIG 19. Lediglich radial über dem Stator 17 ist eine Öffnung im Aufsatzkühler 4 vorgesehen, so dass unter Berücksichtigung der beiden Eigenlüfter 24 und deren Blendenelementen 29 radial unter dem Wickelkopf 19 ein zweiflutiger Primärkühlkreislauf 2 (X-Kühlung) einstellt, wie er sehr vereinfacht dargestellt ist. Der Sekundärkühlkreislauf 3 (wie z.B. in FIG 26 dargestellt) kühlt nach dem gleichen Verfahren gemäß FIG 19.

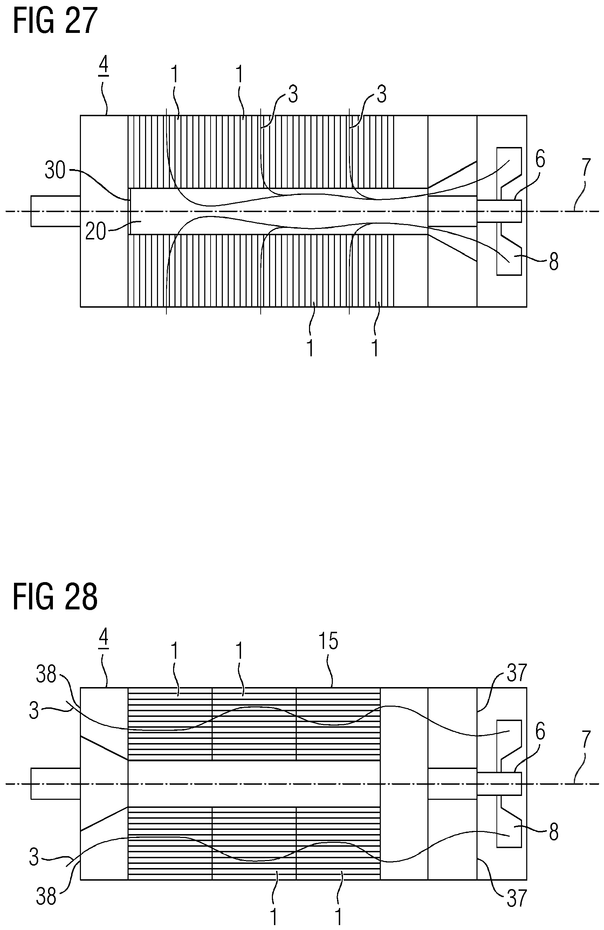

FIG 27 zeigt einen Sekundärluftstrom 3, der unabhängig von der Erzeugung (Fremdlüfter 31 und/oder Eigenlüfter 8) über den Mittelkanal 20 den jeweiligen Modulen 1 zugeführt wird. Die einzelnen Module 1 werden also von dem Sekundärluftstrom 3 parallel durchströmt. Jedes Modul 1 stellt dabei eine nahezu ähnliche Kühlleistung bereit, da der Sekundärluftstrom 3 vor Eintritt in das jeweilige Module 1 eine nahezu gleiche Temperatur aufweist.

FIG 28 zeigt zwei einzelne Sekundärluftströme 3, die die Module 1 seriell durchströmen. Die Kühlleistung pro Module 1 sinkt dabei mit zunehmender Temperatur des Sekundärluftstromes 3.

FIG 29 zeigt einen Teilquerschnitt des Aufsatzkühlers 4 und der dynamoelektrischen Maschine 5, wobei der Aufsatzkühler 4 bezüglich der Anordnung der Module 1 asymmetrisch zum Mittelkanal 20 ausgebildet ist. Dabei sind nun die Module 1 tiefer ausgebildet. Dies kann ein Vorteil sein, wenn die Module 1 nur von einer Seite (hier von rechts) für eine ev. Wartung zugänglich sind.

FIG 30 zeigt diesen Aufbau in einer geschnittenen Draufsicht, dabei sind die Module 1 in ihrer Ausdehnung senkrecht zur Achse 7 länger ausgebildet.

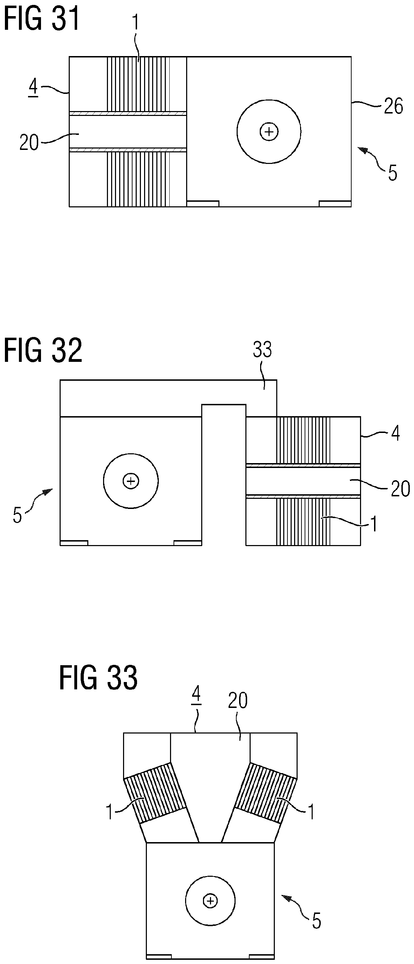

FIG 31 und FIG 32 zeigen beispielhafte Anordnungen des Aufsatzkühlers 4 im Hinblick auf die zu kühlendende dynamoelektrische Maschine 5. Unter Berücksichtigung ev. Leitvorrichtungen 12, Zuleitungen 33 etc. sind die Aufsatzkühler 4 unmittelbar neben, auf oder unter der dynamoelektrischen Maschine 5 anordenbar. Ebenso ist es möglich den Aufsatzkühler 4 in einem anderen Raum aufzustellen. Dabei sind dann der Primärkühlluftstrom 2 dementsprechende über Zuleitungen 33 zu führen.

Auch eine andere Gestaltung des Mittelkanals 20 ist gemäß FIG 33 denkbar.

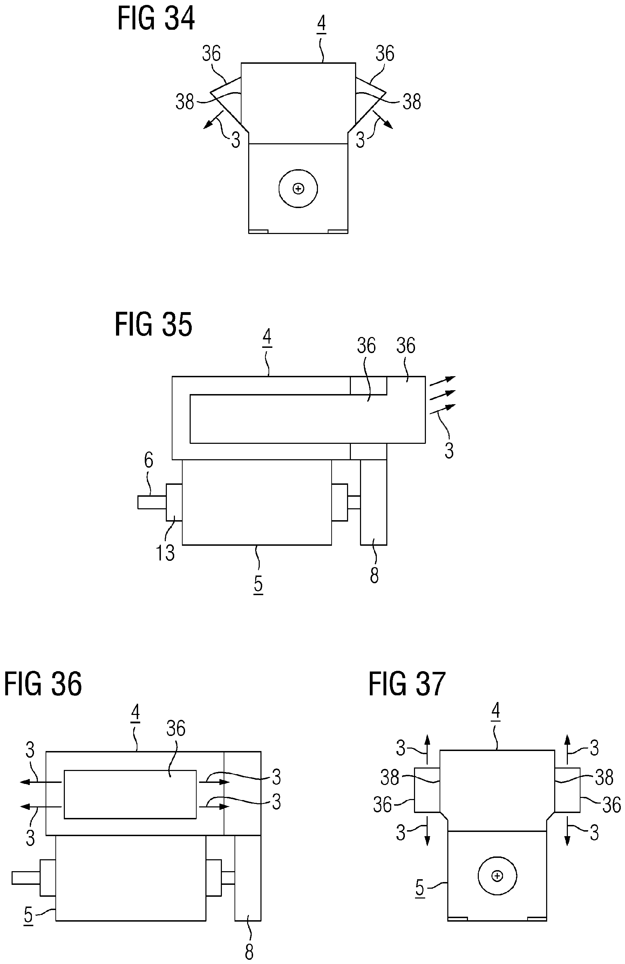

FIG 34 bis 37 zeigen beispielhafte Möglichkeiten der Führung der erwärmten Abluft des Sekundärkreislaufes 3, die aus dem Abluftkanal 38, also aus den Modulen 1 kommt.

Spezielle Leitelemente 36 leiten dabei diese Abluft nach schräg unten (FIG 34), oder zunächst in achsparalleler Richtung und danach optional schräg nach oben (FIG 35). Ebenso sind achsparallele Ausrichtungen der Leitelemente 36 vorstellbar, die die erwärmte Abluft des Sekundärkreislaufes 3 in die eine und/oder andere Richtung gemäß FIG 36 leiten.

Dementsprechende Ausrichtung der Leitelemente 36 können auch die erwärmte Abluft des Sekundärkreislaufes 3 nach oben und/oder nach unten gemäß FIG 37 leiten.

FIG 34 bis FIG 37 zeigen eine Richtung der Abluft. Ebenso kann diese Richtung umgedreht sein, indem beispielsweise die Strömungsrichtung des Sekundärkreislaufes 3 umgedreht wird. Dies wird beispielsweise durch andere Drehrichtung von Fremdlüftern 31 des Sekundärkreislaufes 3 erreicht

Als Materialien für die Platten der Module 1 eignen sich Kunststoffe, Aluminium, Stahl, Kupfer oder Edelstahl. Ebenso ist es denkbar die Platten der Module 1 mit einer Epoxy-Beschichtung, oder weiteren Anstrichen zu versehen.

Ebenso können diese Platten eben oder gewellt ausgeführt sein.

Um eine Schalldämmung des Aufsatzkühlers 4 zu schaffen werden wird der Innenraum des Gehäuses 15 und/oder die Luftaustrittfläche des Sekundärkreislaufes 3 ausgerichtet und/oder zumindest abschnittsweise mit Schalldämmelementen versehen, ohne die Kühlleistung des Aufsatzkühlers 4 zu beeinträchtigen.

Durch die erfindungsgemäße Ausgestaltung des Aufsatzkühlers 4 sind sämtlich bekannte Bauformen möglich, indem die dynamoelektrischen Maschine 5 vertikal, horizontal oder in einem vorgebbaren Winkel geneigt aufstellbar ist. (IM1001...).

Durch die erfindungsgemäße Ausgestaltung des Aufsatzkühlers 4 sind auch weiterhin sämtlich bekannte Kühlarten, wie IC611, IC616, IC666, IC661, etc. umsetzbar.

Der Aufsatzkühler 4 muss nicht zwangsläufig auf der Maschine 5 angeordnet sein. Er kann ebenso seitlich an der Maschine oder sogar unterhalb der Maschine oder in einem separaten Nebenraum angeordnet sein, wie dies beispielsweise den FIG 31 und FIG 32 zu entnehmen ist.

Die innerhalb des Gehäuses 26 angeordneten Wellenlüfter 24 des Primärkreislaufes 2 können unabhängig von der Kühlart (Z- oder X-Belüftung) auf der einer Arbeitsmaschine zugewandten Seite und/oder auf der einer Arbeitsmaschine der abgewandten Seite innerhalb des Gehäuses 26 der dynamoelektrischen Maschine 5 angeordnet sein. (Also der DE-Seite (**D**rive-**E**nd) oder NDE-Seite (**N**on-**D**rive-**E**nd)).

Dies trifft grundsätzlich auch für den Lüfter 8 zu, der - sofern vorgesehen - ebenfalls an der DE-Seite und/oder NDE-Seite der dynamoelektrischen Maschine 5 angeordnet sein kann.

Zumindest einzelne Module 1 können durch den Primärkreislauf 2 und/oder den Sekundärkreislauf 3 strömungstechnisch seriell oder parallel durchströmt werden. Dies wird durch dafür vorgesehene Leitvorrichtungen 12 gewährleistet.

Um den Sekundärkreislauf 3 und/oder den Primärkreislauf 2 aufrecht zu erhalten, kann ergänzend oder allein auch zumindest ein Fremdlüfter 31 vorgesehen werden, der die erforderlich Luftmenge drückt oder durch den Sekundärkreislauf 3 saugt.

Diese Fremdlüfter 31 können - wie oben ausgeführt - an nahezu beliebigen Stellen des Primärkreislauf 2 und/oder Sekundärkreislaufes 3 angeordnet werden.

Dieser erfindungsgemäße Aufsatzkühler 4 eignet sich auch für explosionsgeschützte Anlagen. Dabei ist ggf. auf Abdichtung der Spalte 28, insbesondere zwischen den Modulen 1 erhöhte Aufmerksamkeit zu schenken, um ein Eindringen eines ggf. explosiven Gases in den Primärkreislauf 2 - und damit dem Wicklungssystem - zu verhindern.

Als Kühlmediums des Primärkreislaufes 2 und/oder Sekundärkreislaufes 3 sind außer Luft auch andere gasförmige Medien, wie z. B. Stickstoff möglich. Ebenso sind für den Primärkreislauf 2 und/oder Sekundärkreislauf 3 auch flüssige Kühlmedien, wie Öl oder Wasser denkbar. Entscheidend ist immer der Wärmeaustausch zwischen Primärkreislauf 2 und Sekundärkreislauf 3 über die Module 1 des Aufsatzkühlers 4, die als Plattenkühler ausgeführt sind.

## Patentansprüche

1. Aufsatzkühler (4) einer dynamoelektrischen Maschine (5), die einen Stator (17) mit einem Wicklungssystem und einen um eine Achse (7) drehbar gelagerten Rotor (18) aufweist,
- wobei der Aufsatzkühler (4) als Wärmetauscher ausgebildet ist, der einen Primärkreislauf (2) und einen davon strömungstechnisch getrennten Sekundärkreislauf (3) aufweist,
- wobei der Aufsatzkühler (4) ein Gehäuse (15) mit Aufnahmeöffnungen (22) aufweist, in die als Plattenwärmetauscher ausgebildete Module (1) einsetzbar sind,
- wobei das Gehäuse (15) des Aufsatzkühlers (4) einen, insbesondere achsparallelen Mittelkanal (20) des Sekundärkreislaufs (3) aufweist, der insbesondere mittig im Gehäuse (15) verläuft, und ein Abluftkanal (38) des Sekundärkreislaufs (3) seitlich aus dem Gehäuse (15) führt, insbesondere senkrecht zu einem Zuluftkanal (37).

2. Aufsatzkühler (4) einer dynamoelektrischen Maschine (5) nach Anspruch 1, **dadurch gekennzeichnet, dass** der achsparallele Mittelkanal (20) einen Luftstrom aufnehmen kann, der durch Eigen- oder Fremdlüfter (8, 31) erzeugbar ist, die direkt an der Maschine (5) angeordnet sind.

3. Aufsatzkühler (4) einer dynamoelektrischen Maschine (5) nach Anspruch 1 oder 2, **dadurch gekennzeichnet, dass** der Sekundärkreislauf (3) offen ausführbar ist, d.h. mit Umgebungsluft betreibbar ist.

4. Aufsatzkühler (4) einer dynamoelektrischen Maschine (5) nach einem der vorhergehenden Ansprüche, **dadurch gekennzeichnet, dass** das Gehäuse (15) des Aufsatzkühlers (4) Zu- und Abluftöffnungen (10,11,37,38) sowohl des Primärkreislaufes (2) als auch des Sekundärkreislaufes (3) aufweist.

5. Aufsatzkühler (4) einer dynamoelektrischen Maschine (5) nach einem der vorhergehenden Ansprüche, **dadurch gekennzeichnet, dass** das Gehäuse (15) des Aufsatzkühlers Leitvorrichtungen (12) des Primärkreislaufes (2) als auch des Sekundärkreislaufes (3) aufweist.

6. Aufsatzkühler (4) einer dynamoelektrischen Maschine (5) nach einem der vorhergehenden Ansprüche, **dadurch gekennzeichnet, dass** der Primärkreislauf (2) und/oder der Sekundärkreislauf (3) die Module (1) seriell und/oder parallel durchströmt.

7. Aufsatzkühler (4) einer dynamoelektrischen Maschine (5) nach einem der vorhergehenden Ansprüche, **dadurch gekennzeichnet, dass** der Wärmeaustausch zwischen Primärkreislauf (2) und Sekundärkreislauf (3) zwischen Platten der Module (1) ermöglicht wird, wobei die Platten insbesondere senkrecht zu der Achse (7) ausgerichtet sind.

8. Aufsatzkühler (4) einer dynamoelektrischen Maschine (5) nach einem der vorhergehenden Ansprüche, **dadurch gekennzeichnet, dass** ein Luftfilter vor Sekundärkreislauf (3), insbesondere vor dem Mittenkanal (20) angeordnet ist.

9. Aufsatzkühler (4) einer dynamoelektrischen Maschine (5) nach einem der vorhergehenden Ansprüche, **dadurch gekennzeichnet, dass** die Anordnung der Module (1) strömungstechnisch parallel und/oder seriell im Primärkreislauf (2) und/oder Sekundärkreislauf (3) ausgebildet sind.

10. Dynamoelektrische Maschine (5) mit einem Aufsatzkühler (4) nach einem der vorhergehenden Ansprüche, **dadurch gekennzeichnet, dass** ein Gehäuse (26) der dynamoelektrischen Maschine (5) Öffnungen (10,11) aufweisen, die mit Zu- und Abluftöffnungen des Aufsatzkühlers (4) derart korrespondieren, dass sich ein Primärkreislauf (2) einstellt, der mittels eines Kühlluftstrom eines Sekundärkreislaufes (3) rückkühlbar ist.

11. Dynamoelektrische Maschine (5) mit einem Aufsatzkühler (4) nach Anspruch 10, **dadurch gekennzeichnet, dass** der Kühlluftstrom von Primärkreislauf (2) und/oder Sekundärkreislauf (3) durch Fremdlüfter (31) oder Eigenlüfter (8, 24) der dynamoelektrischen Maschine (5) erfolgt.

12. Verfahren zur Kühlung einer dynamoelektrischen Maschine (5) nach Anspruch 10 oder 11, wobei die Kühltemperatur in einem Primärkreislauf (2) und/oder in einem Sekundärkreislauf (3) mittels Sensoren erfasst werden, diese Daten einer Regelvorrichtung übermittelt werden, um die Drehzahl von Fremdlüftern (31) zu steuern und/oder Leitvorrichtungen (12) des Aufsatzkühlers (4) und/oder der dynamoelektrischen Maschine (5) zu stellen.

13. Verwendung einer dynamoelektrischen Maschine (5) nach Anspruch 10 oder 11 bei Verdichtern, Kompressoren, wobei die Kühlleistung je nach Verwendung und Aufstellungsort über Volumenströme und Anzahl und/oder Art der Module (1) angepasst wird.
